# EUROPÄISCHE PATENTANMELDUNG

(11) **EP 1 515 464 A1**
(43) Veröffentlichungstag der Anmeldung: **16.03.2005**
(21) Anmeldenummer: 03020321.0
(22) Anmeldetag: 09.09.2003
(51) Int. Cl.: H04H 1/00, H04M 1/2745, H04M 11/08, H05K 11/00, H04H 9/00

(54) **Verfahren zum Aufbau einer Telekommunikationsverbindung**

(71) Anmelder: Siemens Aktiengesellschaft, 80333 München (DE)
(72) Erfinder: Stehlik, Günther, 1100 Wien (AT)
(74) Vertreter: Berg, Peter, Dipl.-Ing.

(57) **Zusammenfassung**

Es wird ein Verfahren zum Aufbau einer Verbindung (V) zwischen einem ersten und zweiten Teilnehmer (TLN1, TLN2) eines Telekommunikationsnetzes (TN) angegeben, wobei ein Hinweis zum Aufbau dieser Verbindung (V) von einer Rundfunksendeeinrichtung (RSE) ausgestrahlt, von einer dem ersten Teilnehmer (TLN1) zugeordneten Rundfunkempfangseinrichtung (REE) empfangen und einer zugeordneten Anzeigeeinrichtung (AE) angezeigt wird. In Folge wird diese Verbindung (V) bei Aufruf einer diesem Hinweis zugeordneten Anruffunktion (F) durch den ersten Teilnehmer (TLN1) automatisch aufgebaut. Außerdem wird eine Rundfunksende- sowie eine Rundfunkempfangseinrichtung zur Durchführung des erfindungsgemäßen Verfahrens angegeben.

## Beschreibung

Die Erfindung betrifft ein Verfahren zum Aufbau einer Verbindung zwischen einem ersten und zweiten Teilnehmer eines Telekommunikationsnetzes,
- bei dem ein Hinweis zum Aufbau dieser Verbindung von einer Rundfunksendeeinrichtung ausgestrahlt wird,
- bei dem dieser Hinweis von einer dem ersten Teilnehmer zugeordneten Rundfunkempfangseinrichtung empfangen wird und
- bei dem dieser Hinweis von einer dem ersten Teilnehmer zugeordneten Anzeigeeinrichtung angezeigt wird,
Weiterhin betrifft die Erfindung eine Rundfunksende- sowie eine Rundfunkempfangseinrichtung zur Durchführung des erfindungsgemäßen Verfahrens.

Ein Beispiel für ein Verfahren der genannten Art ist eine TV-Werbesendung, in der verschiedene Produkte angeboten werden. Dabei wird in aller Regel auch eine Kontaktadresse zum Erhalt weiterer Informationen oder zur Abgabe eines Bestellauftrags angegeben. Dies kann etwa eine Postadresse, eine Internet- oder Email-Adresse sein, oder - was der häufigste Fall ist - eine Telefonnummer. Möchte also ein Fernsehzuseher ein angebotenes Produkt kaufen, so wählt er über sein Telefon die Nummer des Verkäufers, um mit diesem in Kontakt zu treten und seine Bestellung abzugeben.

Ein weiteres Beispiel ist ein TV-Programm, bei dem die Zuseher über einen bestimmten Sachverhalt abstimmen können, etwa bei einem Musikwettbewerb. Dazu wird in der Regel wie erwähnt eine Adresse angegeben, bei der die Fernsehzuseher ihre Wahl abgeben können. Im Telekommunikationsnetz werden in Folge die Anrufe gezählt und so ein Abstimmungsergebnis ermittelt.

Die Erfindung bezieht sich jedoch nicht nur auf TV-Programme sondern auf Rundfunkprogramme aller Art, so zum Beispiel auch auf ein Radioprogramm. In ähnlicher Weise können dort sowohl Produkte angeboten werden, als auch Abstimmungen durchgeführt werden. Dazu muss sich der Zuhörer die durchgesagte Adresse merken beziehungsweise notieren, um in Folge eine Verbindung zu dem angegebenen Teilnehmer in einem Telekommunikationsnetz aufzubauen.

Ein Problem, das sich dabei nach dem Stand der Technik ergibt, ist, dass die gewünschte Verbindung nicht hergestellt werden kann, weil seitens des Teilnehmers die über das Rundfunkprogramm übermittelte Adresse falsch eingegeben wird oder der Teilnehmer die übermittelte Adresse überhaupt vergessen hat.

Der Erfindung liegt also die Aufgabe zugrunde, ein Verfahren anzugeben, bei dem Verbindungen zu einer über ein Rundfunkprogramm ausgestrahlten Adresse eines Teilnehmers korrekt aufgebaut werden.

Dies geschieht erfindungsgemäß mit einem Verfahren der eingangs genannten Art, bei dem die Verbindung bei Aufruf einer diesem Hinweis zugeordneten Anruffunktion durch den ersten Teilnehmer automatisch aufgebaut wird.

Dies hat den Vorteil, dass die Adresse des zweiten Teilnehmers zum Verbindungsaufbau nicht mehr eingegeben werden muss. Fehleingaben seitens eines Teilnehmers werden so wirkungsvoll vermieden. Darüber hinaus erfolgt der Verbindungsaufbau deutlich komfortabler und auch schneller. Das erfindungsgemäße Verfahren bezieht sich in diesem Zusammenhang auf sämtliche Technologien, mit Hilfe derer eine Verbindung zwischen zwei Teilnehmern eines Telekommunikationsnetzes auf elektronischem Weg hergestellt werden kann. Darunter sind etwa Telefonverbindung über verbindungsorientierte oder paketorientierte Netze zu verstehen.

Günstig ist es, wenn die Rundfunkempfangseinrichtung im Telekommunikationsnetz als Teilnehmerendstelle des ersten Teilnehmers registriert ist und für den Verbindungsaufbau eine dem zweiten Teilnehmer zugeordneten Adresse mit Hilfe der Anruffunktion in das Telekommunikationsnetz übermittelt wird.

Durch die Einbindung der Rundfunkempfangseinrichtung in das Telekommunikationsnetz braucht hier die Adresse des ersten Teilnehmers, also etwa eine Telefonnummer, nicht übertragen zu werden, da eine Verbindung direkt von der anfordernden Teilnehmerendstelle, nämlich der Rundfunkempfangseinrichtung, zur Teilnehmerendstelle des zweiten Teilnehmers aufgebaut wird. Obwohl die Adresse des ersten Teilnehmers in der Regel nur während eines Initialisierungsvorgangs angegeben werden muss, ist doch das Risiko einer Fehleingabe dieser Adresse gegeben. Diese Variante der Erfindung verhindert vorteilhaft diese Fehleingabe.

Vorteilhaft ist es weiterhin,
- wenn eine dem ersten Teilnehmer zugeordnete Adresse während einer Initialisierung in der Rundfunkempfangseinrichtung gespeichert wird und diese bei einer Anforderung für den Verbindungsaufbau in das Telekommunikationsnetz übermittelt wird oder
- wenn eine dem ersten Teilnehmer zugeordnete Adresse während einer Initialisierung im Telekommunikationsnetz gespeichert wird und eine Anforderung für den Verbindungsaufbau diese Adresse nicht enthält.

Damit die Adresse des ersten Teilnehmers von diesem bei einer Anforderung zum Verbindungsaufbau nicht manuell eingeben werden muss, wird diese bei der vorliegenden vorteilhaften Ausgestaltung gespeichert und bei Bedarf von diesem wieder ausgelesen. Das Speichern kann dabei beispielsweise während eines Initialisierungsvorganges erfolgen. Bei einer ersten Variante wird diese Adresse in der Rundfunkempfangseinrichtung gespeichert und bei einer Anforderung zum Verbindungsaufbau in das Telekommunikationsnetz übermittelt. Vorteilhaft ist hier, dass die Adresse auch dann eingerichtet werden kann, wenn keine Verbindung zu einem externen Netz besteht. Bei einer zweiten Variante wird die Adresse des ersten Teilnehmers direkt im Telekommunikationsnetz, also beispielsweise in einem Gateway gespeichert. Die Anforderung für den Verbindungsaufbau braucht diese Adresse daher nicht enthalten und kann auf vorteilhafte Weise kurz gehalten werden.

Vorteilhaft ist es auch,
- wenn eine dem zweiten Teilnehmer zugeordnete Adresse von der Rundfunksendeeinrichtung an die Rundfunkempfangseinrichtung gesendet wird und diese bei einer Anforderung für den Verbindungsaufbau in das Telekommunikationsnetz übermittelt wird oder
- wenn eine dem zweiten Teilnehmer zugeordnete Adresse von der Rundfunksendeeinrichtung an das Telekommunikationsnetz gesendet wird und eine Anforderung für den Verbindungsaufbau diese Adresse nicht enthält.

Bei einer ersten Variante wird die Adresse eines zweiten Teilnehmers von der Rundfunksendeeinrichtung an die Rundfunkempfangseinrichtung von dort in das Telekommunikationsnetz übermittelt. Eine Eingabe dieser Adresse seitens des ersten Teilnehmers ist daher vorteilhafterweise nicht erforderlich. Bei einer zweiten Variante wird die Adresse von der Rundfunksendeeinrichtung direkt in das Telekommunikationsnetz übermittelt. Vorteilhaft ist dabei, dass die Anforderung für den Verbindungsaufbau kurz gehalten werden kann.

Die Aufgabe der Erfindung wird auch mit einer Rundfunksendeeinrichtung gelöst, welche zum Ausstrahlen eines Hinweises zum Aufbau einer Verbindung zwischen einem ersten und zweiten Teilnehmer eines Telekommunikationsnetzes vorgesehen ist, und
- welche Mittel zum Senden einer dem zweiten Teilnehmer zugeordnete Adresse in einer im Telekommunikationsnetz gebräuchlichen Form umfasst oder
- welche Mittel zum Senden einer dem zweiten Teilnehmer zugeordnete Adresse in einer Form, welche für die Umwandlung in eine im Telekommunikationsnetz gebräuchlichen Form geeignet ist, umfasst.

Bei der ersten Variante ist die erfindungsgemäße Rundfunksendeeinrichtung in der Lage, eine Teilnehmeradresse in einer im Telekommunikationsnetz gebräuchlichen Form, etwa als Zeichenkette, neben dem Rundfunkprogramm bekannter Art zu übertragen. Für den Verbindungsaufbau kann diese Zeichenkette in Folge direkt, also ohne weitere Umwandlung, in das Telekommunikationsnetz weitergesendet werden. Bei der zweiten Variante ist die Rundfunksendeeinrichtung für die Übertragung der Adresse in einer Zwischenform vorgesehen, die erst später in eine im Telekommunikationsnetz gebräuchlichen Form umgewandelt wird. Als Beispiel sei hier genannt, dass die Rundfunksendeeinrichtung die Adresse als Zeichenkette ausstrahlt, welche anschließend, beispielsweise in der Rundfunkempfangseinrichtung, in DTMF-Töne umgewandelt wird.

Die erfindungsgemäße Aufgabe wird weiterhin mit einer Rundfunkempfangseinrichtung gelöst, welche zum Empfang eines Hinweises zum Aufbau einer Verbindung zwischen einem ersten und zweiten Teilnehmer eines Telekommunikationsnetzes vorgesehen ist, und welche Mittel zum automatischen Aufbau der Verbindung aufgrund eines Aufrufs einer diesem Hinweis zugeordneten Anruffunktion durch den ersten Teilnehmer umfasst.

Vorteilhaft an dieser Rundfunkempfangseinrichtung ist, dass die Adresse eines zweiten Teilnehmers zum Verbindungsaufbau nicht eingegeben werden muss. Fehleingaben seitens eines Teilnehmers werden so wirkungsvoll vermieden, und auch der Verbindungsaufbau erfolgt deutlich komfortabler und schneller.

Günstig ist es dabei,
- wenn diese Mittel zum Empfang einer dem zweiten Teilnehmer zugeordneten Adresse in einer im Telekommunikationsnetz gebräuchlichen Form umfasst oder
- wenn diese Mittel zum Empfang einer dem zweiten Teilnehmer zugeordnete Adresse in einer anderen Form und Mittel zur Umwandlung dieser Adresse in eine im Telekommunikationsnetz gebräuchlichen Form umfasst.

Bei der ersten Variante ist die erfindungsgemäße Rundfunkempfangseinrichtung in der Lage, eine Teilnehmeradresse in einer im Telekommunikationsnetz gebräuchlichen Form, etwa als Zeichenkette, neben dem Rundfunkprogramm bekannter Art zu empfangen. Für den Verbindungsaufbau kann diese Zeichenkette, welche einer Rufnummer eines Teilnehmers entspricht, in Folge direkt und ohne weitere Umwandlung in das Telekommunikationsnetz weitergesendet werden. Bei der zweiten Variante wird die Adresse für den Verbindungsaufbau in eine im Telekommunikationsnetz gebräuchliche Form umgewandelt wird, beispielsweise in DTMF-Töne.

Die Erfindung wird nun anhand in den Figuren dargestellter Ausführungsbeispiele näher erläutert, welche verschiedene Möglichkeiten für den automatischen Aufbau einer Verbindung zu einer über ein Rundfunkprogramm ausgestrahlten Adresse eines Teilnehmers.

Es zeigen:
- Figur 1:: eine beispielhafte Anordnung zur Durchführung des erfindungsgemäßen Verfahrens;
- Figur 2:: die Anordnung nach Figur 1 mit einer zweiten Variante zur Übermittlung der Adressen;
- Figur 3:: die Anordnung nach Figur 1 mit einer dritten Variante zur Übermittlung der Adressen;
- Figur 4:: die Anordnung nach Figur 1 mit einer vierten Variante zur Übermittlung der Adressen;
- Figur 5:: die Anordnung nach Figur 1 mit einer zweiten Variante für den Verbindungsaufbau;
- Figur 6:: die Anordnung nach Figur 1 mit einer zweiten Variante für den Verbindungsaufbau;

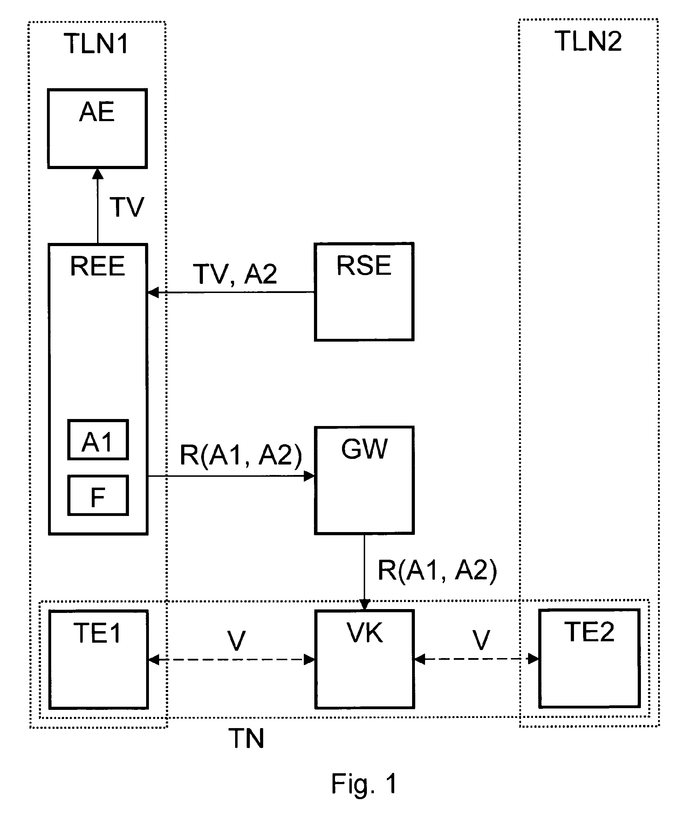

Figur 1 zeigt eine Anordnung zur Durchführung des erfindungsgemäßen Verfahrens und umfasst eine Anzeigeeinrichtung AE, eine Rundfunkempfangseinrichtung REE und eine erste Teilnehmerendstelle TE1, welche einem ersten Teilnehmer TLN1 zugeordnet sind. Die Rundfunkempfangseinrichtung REE beinhaltet dabei eine Anruffunktion F und eine dem ersten Teilnehmer TLN1 zugeordnete Adresse A1. Weiterhin umfasst die Figur eine zweite Teilnehmerendstelle TE2, welche dem zweiten Teilnehmer TLN2 zugeordnet ist. Schließlich ist in der Figur 1 auch eine Rundfunksendeeinrichtung RSE, eine Schnittstelle GW und ein Vermittlungsknoten VK dargestellt. Die erste und die zweite Teilnehmerendstelle TE1 und TE2 sowie der Vermittlungsknoten VK bilden das Telekommunikationsnetz TN. Obwohl die Schnittstelle GW hier nicht inkludiert ist, kann es dennoch zum Telekommunikationsnetz TN gezählt werden, da die Grenzziehung bei Schnittstellen naturgemäß nicht eindeutig ist.

Die Funktion der in der Figur 1 dargestellten Anordnung ist wie folgt:

Von der Rundfunksendeeinrichtung RSE wird ein Rundfunkprogramm TV ausgestrahlt, von der dem ersten Teilnehmer TLN1 zugeordneten Rundfunkempfangseinrichtung REE empfangen, von dieser an die Anzeigeeinrichtung AE übertragen und dort angezeigt. Zum einfacheren Verständnis soll hier als Beispiel für ein Rundfunkprogramm TV ein Fernsehprogramm, für die Rundfunkempfangseinrichtung REE ein Empfänger für digitales Fernsehen und für die Anzeigeeinrichtung AE ein Fernseher genannt werden. In die laufende Sendung, in der zum Beispiel Waren zum Verkauf angeboten werden, wird nun eine Telefonnummer eingeblendet, unter der diese Waren bestellt werden können. Aber auch eine Telefonabstimmung, die über das laufende Programm ausgestrahlt wird, wäre an dieser Stelle denkbar.

Zusätzlich zum Rundfunkprogramm TV wird auch die Adresse A2 des zweiten Teilnehmers TLN2 in einer im Telekommunikationsnetz TN gebräuchlichen Form ausgestrahlt. Denkbar ist auch, dass die Adresse A2 in einer Form ausgestrahlt wird, welche erst in der Rundfunkempfangseinrichtung REE in eine im Telekommunikationsnetz TN gebräuchliche Form umgewandelt wird.

Eine Variante der Erfindung ist auch, dass die Adresse A2 des zweiten Teilnehmers TLN2 nicht über das Rundfunkprogramm TV selbst übertragen wird, sondern erst von der Rundfunkempfangseinrichtung REE in das Fernsehbild gemischt und zur Anzeigeeinrichtung AE übertragen wird. Möglich wäre hierbei etwa ein sogenanntes "Popup-Window" mit dem Text "Möchten Sie Teilnehmer 2 anrufen? Ja/Nein".

In der Rundfunkempfangseinrichtung REE ist nun zusätzlich eine Anruffunktion F vorhanden, die etwa durch entsprechenden Tastendruck auf der Rundfunkempfangseinrichtung REE selbst oder auf einer zugeordneten Fernbedienung aktiviert wird. Denkbar ist hierbei, dass ein sogenannter "Soft-Key" der Antwort "Ja" auf die Frage "Möchten Sie Teilnehmer 2 anrufen?" zugeordnet ist. In Folge wird eine Anforderung R zum Aufbau einer Verbindung V mit der Adresse A1 des ersten Teilnehmers TLN1 und der Adresse A2 des zweiten Teilnehmers TLN2 an die Schnittstelle GW gesendet und von dieser an den Vermittlungsknoten VK weitergeleitet. Dort wird die Information ausgewertet und eine Verbindung V zwischen erster und zweiter Teilnehmerendstelle TE1 und TE2 aufgebaut.

Grundsätzlich ist das erfindungsgemäße Verfahren natürlich auch für die Anwendung bei einem Radioprogramm denkbar.

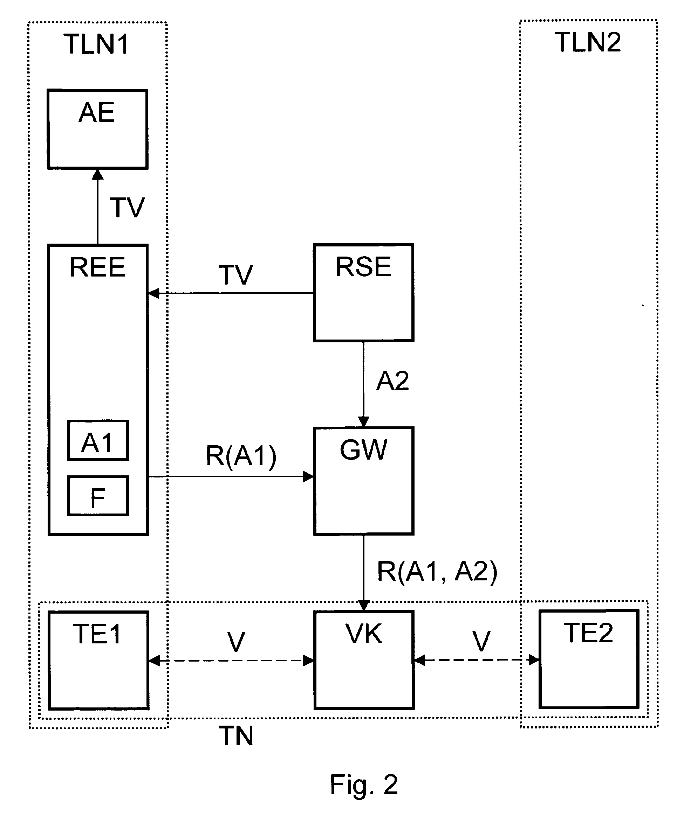

Die Funktion der in Figur 2 dargestellten Anordnung unterscheidet sich lediglich hinsichtlich der Übermittlung der Adresse A2 des zweiten Teilnehmers TLN2. Diese wird nämlich nicht wie in Figur 1 dargestellt an die Rundfunkempfangseinrichtung REE sondern direkt an die Schnittstelle GW gesendet. Die Anforderung R zum Aufbau einer Verbindung V, welche an die Schnittstelle GW gesendet wird, enthält daher nur die Adresse A1 des ersten Teilnehmers TLN1. An den Vermittlungsknoten VK, wo die Information ausgewertet und eine Verbindung V zwischen erster und zweiter Teilnehmerendstelle TE1 und TE2 aufgebaut wird, wird aber wie gehabt eine Anforderung R, welche sowohl die Adresse A1 des ersten Teilnehmers TLN1 als auch die Adresse A2 des zweiten Teilnehmers TLN2 beinhaltet, weitergeleitet.

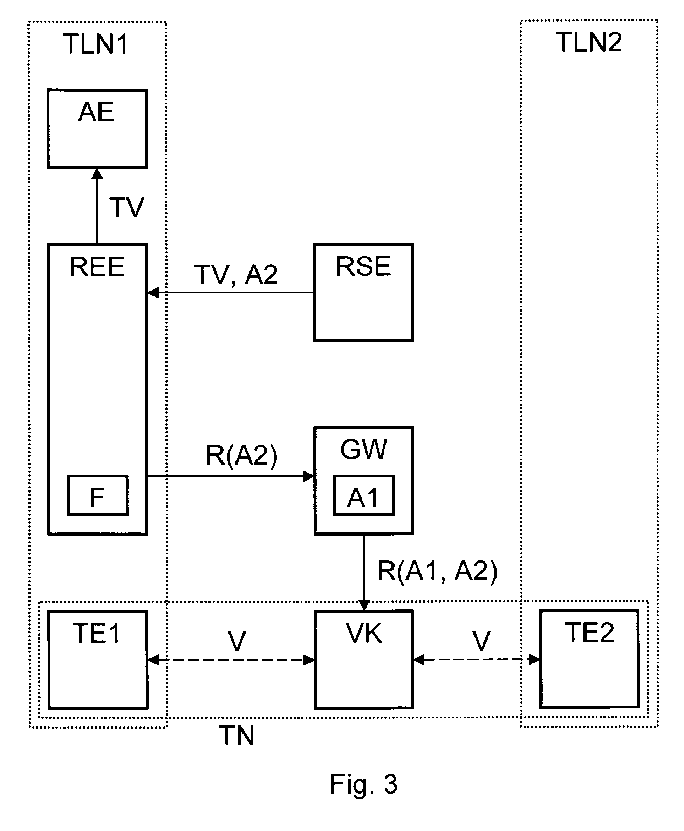

In der Figur 3 wird die Adresse A1 des ersten Teilnehmers TLN1 abweichend von der in der Figur 1 dargestellten Anordnung nicht in der Rundfunkempfangseinrichtung REE sondern in der Schnittstelle GW gespeichert. Abgesehen davon ist die in der Figur 3 dargestellte Anordnung identisch mit der Anordnung aus Figur 1. Wie bereits erwähnt wird das Rundfunkprogramm TV gemeinsam mit der Adresse A2 des zweiten Teilnehmers TLN2 ausgestrahlt. Da die Adresse A1 des ersten Teilnehmers TLN1 in der Schnittstelle GW gespeichert ist, enthält eine Anforderung R lediglich die Adresse A2 des zweiten Teilnehmers TLN2. An den Vermittlungsknoten VK wird in Folge wieder eine Anforderung R, welche sowohl die Adresse A1 des ersten Teilnehmers TLN1 als auch die Adresse A2 des zweiten Teilnehmers TLN2 beinhaltet, weitergeleitet.

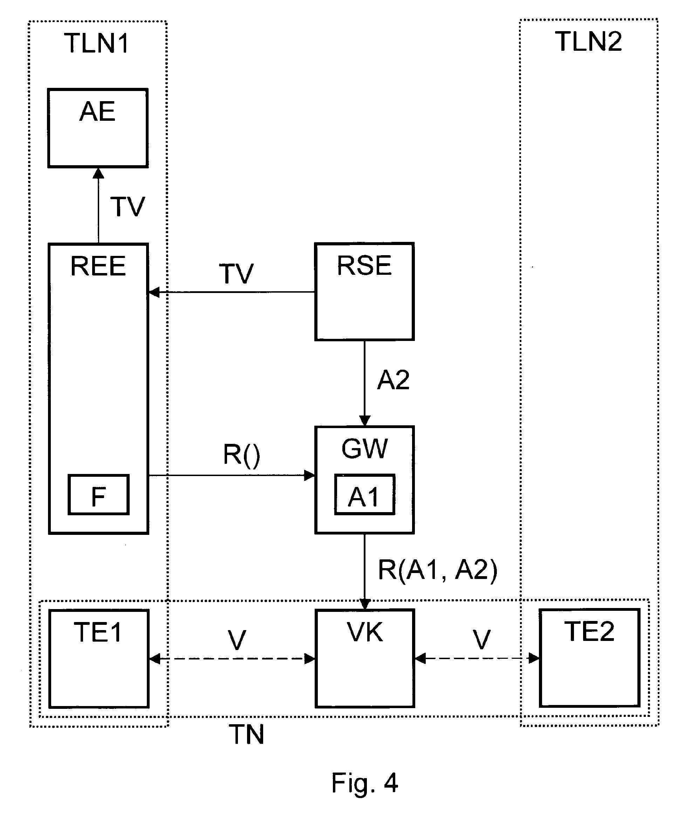

Die Funktion der in Figur 4 dargestellten Anordnung unterscheidet sich gegenüber Figur 3 lediglich hinsichtlich der Übermittlung der Adresse A2 des zweiten Teilnehmers TLN2. Diese wird nämlich nicht wie in Figur 3 dargestellt an die Rundfunkempfangseinrichtung REE sondern direkt an die Schnittstelle GW gesendet. Die Anforderung R zum Aufbau einer Verbindung V, welche an die Schnittstelle GW gesendet wird, enthält daher keine Adresse. An den Vermittlungsknoten VK wird jedoch wieder eine Anforderung R mit der Adresse A1 des ersten Teilnehmers TLN1 und der Adresse A2 des zweiten Teilnehmers TLN2 weitergeleitet.

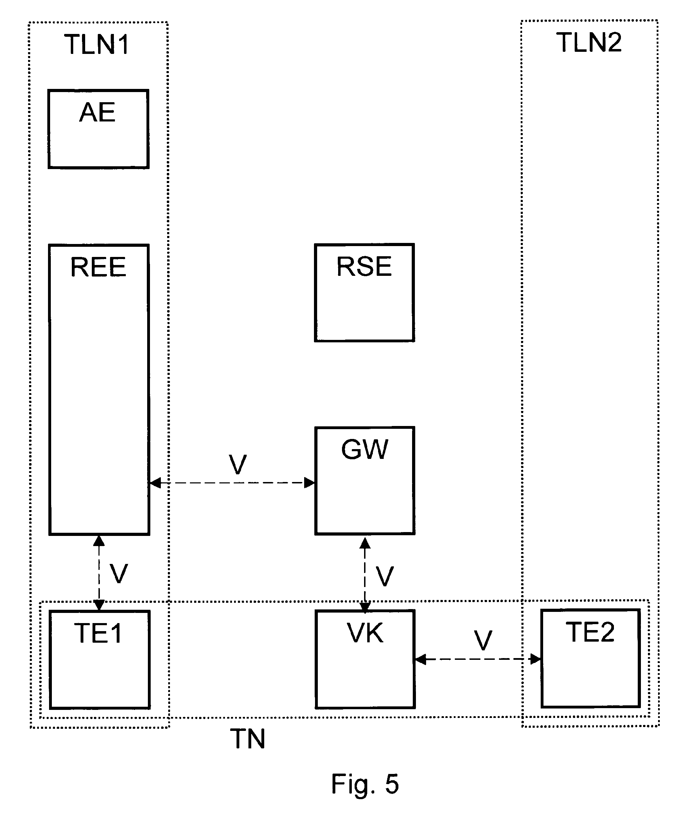

Figur 5 zeigt schließlich eine Möglichkeit, bei der die Verbindung V über das Netz geführt wird, an das die Rundfunkempfangseinrichtung REE angeschlossen ist. Ausgehend von der zweiten Teilnehmerendstelle TE2 wird die Verbindung V also über den Vermittlungsknoten VK, die Schnittstelle GW zur Rundfunkempfangseinrichtung REE geführt. Die erste Teilnehmerendstelle TE1 ist an diese angeschlossen und bildet so den zweiten Endpunkt der Verbindung V. Die in Figur 1 bis 4 genannten Prinzipien zur Initiierung einer Verbindung V sind für die dargestellte Anordnung gleichermaßen anwendbar.

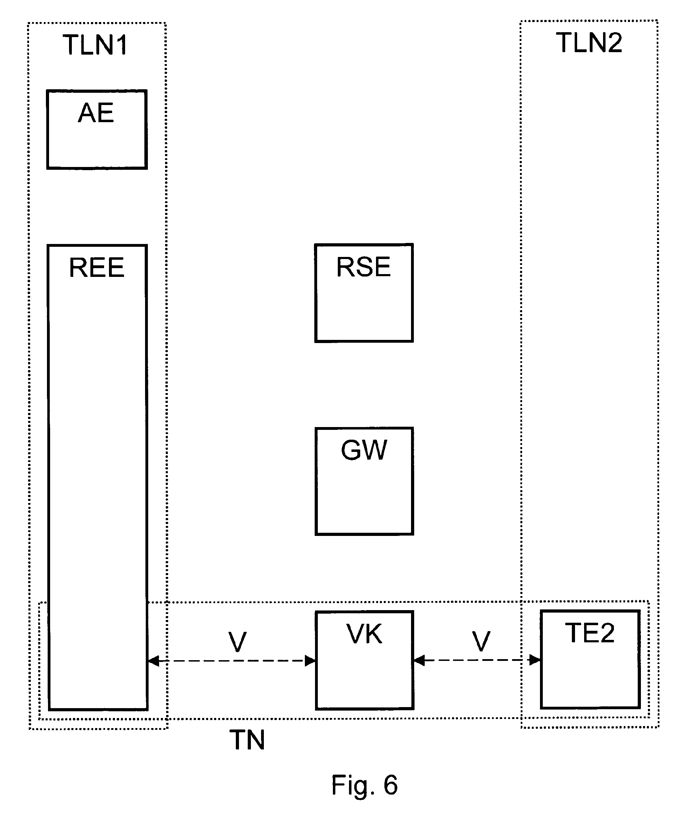

Figur 6 zeigt eine Anordnung, bei der die Rundfunkempfangseinrichtung REE selbst Teilnehmerendstelle im Telekommunikationsnetz TN ist. Dieser ist auch die Adresse A1 des ersten Teilnehmers TLN1 zugeordnet. Die Verbindung V wird daher direkt von der Rundfunkempfangseinrichtung REE über den Vermittlungsknoten VK zur zweiten Teilnehmerendstelle TE2 geschaltet. Die Rundfunkempfangseinrichtung REE kann dabei Mittel zur Sprachein- und ausgabe umfassen. Denkbar ist auch, dass an die Rundfunkempfangseinrichtung REE angeschlossene Geräte dazu genutzt werden, etwa ein Lautsprecher eines mit der Rundfunkempfangseinrichtung REE verbundenen Fernsehers. Durch die Einbindung der Rundfunkempfangseinrichtung REE in das Telekommunikationsnetz TN erübrigt sich bei dieser Variante der Erfindung vorteilhaft auch die Speicherung beziehungsweise Übertragung der Adresse A1 des ersten Teilnehmers TLN1, da die Verbindung V ja direkt zu der anfordernden Teilnehmerendstelle, nämlich der Rundfunkempfangseinrichtung REE aufgebaut wird.

## Patentansprüche

1. Verfahren zum Aufbau einer Verbindung (V) zwischen einem ersten und zweiten Teilnehmer (TLN1, TLN2) eines Telekommunikationsnetzes (TN),
- wobei ein Hinweis zum Aufbau dieser Verbindung (V) von einer Rundfunksendeeinrichtung (RSE) ausgestrahlt wird,
- wobei dieser Hinweis von einer dem ersten Teilnehmer (TLN1) zugeordneten Rundfunkempfangseinrichtung (REE) empfangen wird und
- wobei dieser Hinweis von einer dem ersten Teilnehmer (TLN1) zugeordneten Anzeigeeinrichtung (AE) angezeigt wird,
**dadurch gekennzeichnet,**
- **dass** die Verbindung (V) bei Aufruf einer diesem Hinweis zugeordneten Anruffunktion (F) durch den ersten Teilnehmer (TLN1) automatisch aufgebaut wird.

2. Verfahren nach Anspruch 1, **dadurch gekennzeichnet,**
**dass** die Rundfunkempfangseinrichtung (REE) im Telekommunikationsnetz (TN) als Teilnehmerendstelle des ersten Teilnehmers (TLN1) registriert ist und für den Verbindungsaufbau eine dem zweiten Teilnehmer (TLN2) zugeordneten Adresse (A2) mit Hilfe der Anruffunktion (F) in das Telekommunikationsnetz (TN) übermittelt wird.

3. Verfahren nach Anspruch 1, **dadurch gekennzeichnet,**
- **dass** eine dem ersten Teilnehmer (TLN1) zugeordnete Adresse (A1) während einer Initialisierung in der Rundfunkempfangseinrichtung (RSE) gespeichert wird und diese bei einer Anforderung für den Verbindungsaufbau in das Telekommunikationsnetz (TN) übermittelt wird oder
- **dass** eine dem ersten Teilnehmer (TLN1) zugeordnete Adresse (A1) während einer Initialisierung im Telekommunikationsnetz (TN) gespeichert wird und eine Anforderung für den Verbindungsaufbau diese Adresse (A1) nicht enthält.

4. Verfahren nach einem der Ansprüche 1 bis 3, **dadurch gekennzeichnet,**
- **dass** eine dem zweiten Teilnehmer (TLN2) zugeordnete Adresse (A2) von der Rundfunksendeeinrichtung (RSE) an die Rundfunkempfangseinrichtung (REE) gesendet wird und diese bei einer Anforderung für den Verbindungsaufbau in das Telekommunikationsnetz (TN) übermittelt wird oder
- **dass** eine dem zweiten Teilnehmer (TLN2) zugeordnete Adresse (A2) von der Rundfunksendeeinrichtung (RSE) an das Telekommunikationsnetz (TN) gesendet wird und eine Anforderung für den Verbindungsaufbau diese Adresse (A2) nicht enthält.

5. Rundfunksendeeinrichtung (RSE), welche zum Ausstrahlen eines Hinweises zum Aufbau einer Verbindung (V) zwischen einem ersten und zweiten Teilnehmer (TLN1, TLN2) eines Telekommunikationsnetzes (TN) vorgesehen ist,
**dadurch gekennzeichnet,**
- **dass** diese Mittel zum Senden einer dem zweiten Teilnehmer (TLN2) zugeordnete Adresse (A2) in einer im Telekommunikationsnetz (TN) gebräuchlichen Form umfasst oder
- **dass** diese Mittel zum Senden einer dem zweiten Teilnehmer (TLN2) zugeordnete Adresse (A2) in einer Form, welche für die Umwandlung in eine im Telekommunikationsnetz (TN) gebräuchlichen Form geeignet ist, umfasst.

6. Rundfunkempfangseinrichtung (REE), welche zum Empfang eines Hinweises zum Aufbau einer Verbindung (V) zwischen einem ersten und zweiten Teilnehmer (TLN1, TLN2) eines Telekommunikationsnetzes (TN) vorgesehen ist,
**dadurch gekennzeichnet,**
**dass** diese Mittel zum automatischen Aufbau der Verbindung (V) aufgrund eines Aufrufs einer diesem Hinweis zugeordneten Anruffunktion (F) durch den ersten Teilnehmer (TLN1) umfasst.

7. Rundfunkempfangseinrichtung (REE) nach Anspruch 6,
**dadurch gekennzeichnet,**
- **dass** diese Mittel zum Empfang einer dem zweiten Teilnehmer (TLN2) zugeordneten Adresse (A2) in einer im Telekommunikationsnetz (TN) gebräuchlichen Form umfasst oder
- **dass** diese Mittel zum Empfang einer dem zweiten Teilnehmer (TLN2) zugeordnete Adresse (A2) in einer anderen Form und Mittel zur Umwandlung dieser Adresse (A2) in eine im Telekommunikationsnetz (TN) gebräuchlichen Form umfasst.
